# NOUVEAU FASCICULE DE BREVET EUROPEEN

(11) **EP 1 987 197 B2**
(45) Date de publication et mention de la décision concernant l'opposition: **16.10.2019**
(45) Mention de la délivrance du brevet: 09.06.2010
(21) Numéro de dépôt: 07731599.2
(22) Date de dépôt: 09.02.2007
(51) Int. Cl.: D21H 27/30, D21H 19/66, D21H 21/28, D21F 1/44, B32B 29/00, D21H 21/40

(54) **MATERIAU EN FEUILLE COMPORTANT AU MOINS UN FILIGRANE AVEC UNE NUANCE COLOREE**
BLATTMATERIAL BEINHALTEND MINDESTENS EIN WASSERZEICHEN MIT EINEM KOLORIERTEN ABTÖNUNG
FILM MATERIAL COMPRISING AT LEAST ONE WATERMARK HAVING A COLOURED NUANCE

(30) Priorité: 09.02.2006 FR 0650470
(43) Date de publication de la demande: 05.11.2008
(73) Titulaire: Oberthur Fiduciaire SAS, 75008 Paris (FR)
(72) Inventeur: ROSSET, Henri, F-38730 Le Pin (FR); THIERRY, Ivan, F-77320 Jouy sur Morin (FR)
(74) Mandataire: Nony
(86) Numéro de dépôt international: PCT/FR2007/050774
(87) Numéro de publication internationale: WO 2007/090999

(56) Documents cités:
- EP-A- 0 773 320
- EP-A- 1 122 360
- WO-A-02/20902
- WO-A-94/20679
- WO-A-96/38630
- WO-A-2004/028825
- WO-A-2005/038135
- FR-A- 2 769 927
- GB-A- 2 321 471
- US-A- 5 114 782
- US-A- 5 565 276

## Description

La présente invention concerne un matériau en feuille comportant au moins un filigrane.

Il est connu d'utiliser la technique du filigrane pour réaliser des documents de sécurité qui doivent être protégés contre une tentative de falsification, ces documents étant par exemple des billets de banque, des moyens de paiement, des pièces d'identité, des titres de transport, des billets d'entrée à des manifestations culturelles ou sportives.

La présence du filigrane vise à rendre impossible la copie du document par des moyens optiques tels que la photocopie, la photographie ou la numérisation, du fait que le support de la copie ne comporterait pas le filigrane du document original.

On connaît également des papiers filigranés utilisés à des fins décoratives, notamment pour des papiers d'impression-écriture, en particulier les papiers pour têtes de lettre, prestigieux.

Les filigranes sont classiquement obtenus par une opération de moulage ou d'embossage de la feuille humide issue de la suspension aqueuse de fibres cellulosiques lors de la fabrication du papier. A ce stade de la fabrication, les fibres cellulosiques migrent facilement dans la suspension aqueuse, de sorte que l'opération précitée a pour effet d'augmenter la concentration des fibres dans les zones les plus épaisses de la feuille et de diminuer leur concentration dans les zones plus minces, le résultat obtenu après séchage du papier étant que ce dernier comporte, lorsqu'on le regarde en lumière transmise, des zones claires, pauvres en fibres, et des zones sombres, à forte densité de fibres.

Les zones claires sont appelées zones à faible densité optique, inférieure à celle du vélin, zone du papier non filigranée, et les zones sombres sont appelées zones à forte densité optique, supérieure à celle du vélin.

La demande WO 96/38630 décrit la fabrication d'un support d'écriture et d'impression pour permettre de neutraliser la lecture par transparence comportant une feuille-support ayant une aptitude à la coloration modulable.

La demande WO 2005/038135 décrit un papier de sécurité comportant deux couches fibreuses, l'une comportant un élément d'authentification et l'autre comportant un élément de renforcement.

Il existe un besoin pour améliorer encore la sécurité des matériaux en feuille contre une tentative de falsification.

Il existe également un besoin pour disposer de papiers filigranés, notamment dans le domaine des papiers fins ou d'impression-écriture, présentant un nouvel effet esthétique.

L'invention a ainsi pour objet, selon l'un de ses aspects, un matériau en feuille, notamment pour un document de sécurité et/ou de valeur, selon la revendication 1.

Ladite au moins une première couche peut définir, de préférence, une face extérieure du matériau en feuille. Les première et deuxième couleurs peuvent avoir au moins des saturations C* et/ou des angles de teinte *h* différents.

Les agents de coloration sont choisis de manière à conférer auxdites couches une nuance colorée, sur une partie ou sur toute la surface de ladite couche.

La deuxième couche est une couche fibreuse, notamment à base de fibres cellulosiques.

L'expression « matériau en feuille » peut désigner dans la description et les revendications une feuille fibreuse à base de fibres cellulosiques et/ou synthétiques et/ou organiques autres que la cellulose et/ou de fibres minérales, pouvant contenir, le cas échéant, diverses charges et divers additifs couramment utilisés en papeterie. Le matériau en feuille peut présenter une structure monocouche (ou monojet) ou multicouche (ou multijet), composite ou non. Un matériau en feuille peut par exemple présenter une épaisseur relativement faible, notamment inférieure ou égale à 1 mm, par exemple égale à 100 µm environ, et être flexible.

Toutes les couleurs sont possibles, sauf la couleur blanche. Aucune des deux couleurs n'est la couleur blanche.

Par « agent de coloration », on entend un agent, soluble ou non, apte à colorer au moins une des couches en lumière visible.

Par « nuance colorée », on entend une coloration apparaissant à l'oeil nu comme sensiblement continue, à la différence de la coloration que pourrait procurer localement une incorporation de fibres ou de planchettes par exemple. Une nuance colorée n'exclut pas cependant des variations de teinte. Classiquement, une nuance colorée est obtenue en dispersant dans la masse au moins un colorant et/ou au moins un pigment.

Dans un exemple de mise en oeuvre de l'invention, le matériau en feuille peut être conditionné en bobine, notamment avant d'être découpé au format souhaité.

Les différentes composantes de la couleur sont définies dans l'espace colorimétrique CIE1976 (L*, a*, b*) ou CIELAB. La valeur a* correspond à la position sur l'axe rouge/vert et la valeur b* à la position sur l'axe bleu/jaune. La saturation C* correspond à la quantité (a*² + b*²)^{1/2}. L'angle de teinte h correspond à la quantité arctan (a*/b*). L* désigne la clarté.

Le matériau en feuille selon l'invention présente l'avantage d'être plus complexe à reproduire du fait de la présence de couches de couleurs différentes et d'au moins un filigrane qui apparaît, en lumière transmise, avec une nuance colorée, un tel filigrane étant relativement difficile à copier.

Par ailleurs, l'invention permet, le cas échéant, d'améliorer l'esthétique du matériau en feuille en jouant sur la couleur du filigrane, ainsi que celles des faces extérieures du matériau.

Dans un exemple de mise en oeuvre de l'invention, l'une au moins des première et deuxième couches présente une clarté L* supérieure à 70, notamment 80 ou 90.

La deuxième couche peut présenter, si on le souhaite, une couleur ayant une saturation C* inférieure à 50, notamment à 35 ou 20, de manière à apparaître, en réflexion, avec une couleur nuancée, faiblement saturée.

La deuxième couche incorpore dans sa masse au moins un agent de coloration.

Cet agent de coloration est choisi parmi : un colorant direct, un colorant acide, un colorant basique, un pigment organique ou minéral.

Les première et deuxième couleurs précitées peuvent être dues à des agents de coloration différents et/ou à des concentrations différentes présents respectivement dans la masse des première et deuxième couches.

Le filigrane peut apparaître, en lumière transmise, sous une couleur ayant un angle de teinte correspondant sensiblement à celui de la deuxième couche observée en réflexion.

Les zones les plus opaques de la deuxième couche, qui est fibreuse, correspondant aux zones sombres du filigrane peuvent présenter, le cas échéant, une saturation plus soutenue que celle des zones de plus faible opacité correspondant aux zones claires du filigrane.

Le contraste entre les zones sombres et les zones claires du filigrane dépend notamment de la nature et de la couleur du ou des colorants incorporés dans la masse de la deuxième couche.

Par exemple, le filigrane peut apparaître avec un contraste plus marqué, en lumière transmise, lorsque la deuxième couche présente une nuance bleue, par rapport à une nuance jaune par exemple.

Dans un exemple non inclus dans l'invention, la première couche est une couche fibreuse assemblée avec la deuxième couche, qui peut être également fibreuse.

Les deux couches peuvent par exemple définir deux faces extérieures opposées du matériau en feuille.

Dans cet exemple, la première couche peut comporter au moins un filigrane.

Le matériau en feuille peut apparaître, en lumière transmise, avec une couleur correspondant à la superposition des couleurs respectives des deux couches tandis que les filigranes respectifs des deux couches apparaissent avec des couleurs différentes, notamment avec des angles de teinte différents, du fait du contraste plus marqué des filigranes.

Ce mode de réalisation peut ainsi rendre une tentative de falsification du matériau en feuille relativement difficile du fait de la présence d'un ensemble de filigranes de couleurs différentes.

Notamment, cela peut permettre d'écarter une tentative de reproduction d'un matériau en feuille à l'aide d'une opération de transparentisation d'un papier à l'aide d'une substance appropriée car cette opération de transparentisation est achromatique et ne permet donc pas d'obtenir des filigranes de couleurs différentes.

Cela peut en outre permettre de créer des effets visuels variés.

Les filigranes peuvent présenter, si on le souhaite, des couleurs reproduisant par exemple celles d'un drapeau national.

Dans un exemple non conforme à l'invention, les filigranes des deux couches sont agencés de manière à coopérer, lorsque le matériau est observé en lumière transmise, pour former un motif composé, les filigranes comportant par exemple des portions adjacentes et/ou se superposant. Ces filigranes peuvent être disposés de manière repérée l'un relativement à l'autre.

Le motif composé peut être choisi parmi au moins l'un des éléments suivants : un caractère alphanumérique, un symbole, un logo ou un dessin.

Le motif composé comporte par exemple un portrait formé par un premier filigrane reproduisant un visage d'un personnage et apparaissant en lumière transmise avec par exemple une nuance rose et un deuxième filigrane reproduisant la chevelure du personnage et apparaissant en lumière transmise avec par exemple une nuance jaune.

Cela permet ainsi de restituer l'aspect d'un filigrane multicolore.

Dans un exemple de mise en oeuvre de l'invention, la première couche est dépourvue de filigrane.

Le matériau en feuille peut comporter, le cas échéant, plus de deux couches, éventuellement fibreuses, par exemple trois ou quatre couches, dont au moins certaines peuvent comporter un filigrane et présenter des couleurs différentes.

L'épaisseur totale du matériau en feuille peut être choisie de manière à ce que son opacité n'affecte sensiblement pas le contraste du ou des filigranes observés en lumière transmise.

Le matériau en feuille peut comporter, le cas échéant, une troisième couche d'un revêtement comportant au moins un agent de coloration, les trois couches ayant notamment des couleurs différentes.

La première couche est une couche d'un revêtement, déposée par exemple sur la deuxième couche.

Par « couche de revêtement », on entend classiquement une couche recouvrant sensiblement toute une face du matériau en feuille, constituant ainsi la face extérieure de ce matériau.

La couche de revêtement comporte de préférence au moins un colorant.

La deuxième couche comporte dans sa masse au moins un agent de collage.

Le filigrane de la deuxième couche fibreuse, observé en lumière transmise à travers la couche de revêtement, peut apparaître avec une couleur correspondant sensiblement à la couleur de cette deuxième couche.

Le contraste, en lumière transmise, entre la couleur du filigrane et celle de la face extérieure définie par la couche de revêtement peut dépendre notamment du choix de la couleur de la deuxième couche et de celle de la couche de revêtement.

Dans un exemple de mise en oeuvre de l'invention, le matériau en feuille comporte deux couches de revêtement définissant deux faces extérieures du matériau en feuille.

Dans un exemple de mise en oeuvre de l'invention, la couche de revêtement pénètre dans la masse de la deuxième couche, sur une portion seulement de l'épaisseur de cette deuxième couche.

Cette couche de revêtement est par exemple être déposée par un traitement de surfaçage à l'aide d'une presse encolleuse ou par imprégnation de la deuxième couche.

La couche de revêtement est, en variante, déposée par couchage sur la deuxième couche.

La couche de revêtement peut s'étendre sensiblement uniquement en surface de la deuxième couche, sans pénétrer dans la masse de celle-ci, et permettre notamment d'améliorer le rendu d'impression du matériau en feuille.

La couche de revêtement peut comporter, le cas échéant, des pigments de couchage.

Cette couche de revêtement peut être transparente ou translucide et par exemple comporter au moins une silice colloïdale.

On peut se référer notamment à la demande internationale WO 02/20902 qui décrit un exemple d'une telle couche de revêtement.

La couche de revêtement peut être une couche de surface à base de liant, avantageusement agencée pour conférer à la structure des caractéristiques d'imprimabilité et/ou des propriétés spécifiques telles qu'un effet optique variable.

La couche de surface peut être différente d'un vernis. La couche de surface peut être notamment une composition comprenant des pigments de couchage ou de surfaçage et au moins un liant. Comme pigments, il peut s'agir de pigments minéraux naturels ou de synthèse, notamment du kaolin et/ou du carbonate de calcium et/ou silice, éventuellement pyrogénée et/ou un dioxide de titane éventuellement pyrogénée ou encore des pigments iridescents, notamment de type mica-titane ou encore des pigments en plastique, par exemple des microsphères creuses plastiques à base de polymère styrène notamment styrène-acrylique. En particulier le diamètre moyen des microsphères est compris entre 0,5 mm et 1,0 mm.

Cette couche peut comporter au moins un liant, notamment un amidon ou des liants synthétiques usuels en papeterie, ainsi que, éventuellement, tous additifs couramment employés par l'homme de l'art dont la fonction est d'améliorer les propriétés rhéologiques de la sauce de couchage et de conférer des propriétés particulières à la couche. Le poids de la couche peut être de 2 à 50 g/m² sur une ou chaque face, c'est-à-dire incluant un surfaçage ayant un poids de couche entre 2 à 10 g/m².

Dans un mode de réalisation particulier, la couche pigmentée comporte de 70 à 95 % de pigments et 5 à 30 % de liants, sans compter les additifs.

Selon un mode de réalisation particulier, la couche de surface est au moins translucide et comprend 30 à 50 parties en poids sec de silice pyrogénée et 50 à 70 parties en poids sec d'un liant élastomère notamment un polyuréthane, la somme des parties de ces composants faisant 100 au total, le poids de la couche déposée est compris entre 1 et 15 g/m² par face en sec, de préférence entre 1 et 10 g/m² par face, de préférence encore entre 2 et 7 g/m² par face en sec. La couche peut comporter d'autres additifs dispersants, agents modificateurs de la viscosité, plastifiants, agents bactériostatiques, fongicides par exemple. Il n'est pas exclu qu'elle comporte d'autres agents d'authentification ou d'infalsification.

Le matériau en feuille peut comporter deux faces extérieures opposées présentant en réflexion, sous lumière visible, des couleurs différentes, notamment des saturations et/ou des angles de teinte différents.

En variante, les faces extérieures présentent en réflexion, sous lumière visible, des couleurs sensiblement identiques.

Le matériau en feuille, notamment la deuxième couche, peut comporter, de préférence, au moins un filigrane présentant une pluralité de tons, par exemple un dégradé de tons, par exemple un filigrane ombré.

Le filigrane peut être un filigrane clair ou un filigrane sombre.

Dans un exemple de mise en oeuvre de l'invention, le matériau peut comporter au moins un filigrane à effet multiton comprenant un ensemble de zones claires agencées pour former une image tramée présentant des tons clairs et sombres. Cette image tramée peut comporter des motifs de trame formés par exemple par des lignes. Les zones claires du filigrane présentent une masse surfacique strictement inférieure à la partie du vélin du reste de la couche fibreuse.

Le matériau en feuille peut recevoir au moins une impression ultérieure.

Le matériau en feuille peut comporter au moins un élément d'authentification et/ou d'identification choisi notamment parmi au moins l'un des éléments suivants : un élément de mise en évidence d'une falsification, notamment visible et/ou détectable à l'aide d'un dispositif spécifique de détection, un élément à effet optique variable, interférentiel et/ou diffractif, iridescent ou à cristaux liquides, un revêtement magnétique, des traceurs détectables par fluorescence X, des biomarqueurs, un vernis ou une encre, des traceurs luminescents, fluorescents ou phosphorescents, des composés photochromiques, thermochromiques, électroluminescents et/ou piezochromiques et/ou qui changent de couleur au contact d'un ou de plusieurs produits prédéterminés.

Le matériau en feuille peut comporter le cas échéant, un élément de sécurité en fil ou en bande.

Cet élément de sécurité peut être incorporé au moins partiellement dans le matériau en feuille, notamment entre deux couches fibreuses, ou être incorporé dans la masse de l'une des couches fibreuses. Cet élément peut être totalement incorporé dans le matériau, ou en variante, partiellement incorporé de manière à apparaître dans des fenêtres sur une face du matériau, l'une au moins des fenêtres pouvant être traversante.

Le matériau en feuille peut comporter un élément de sécurité fixé sur une face extérieure du matériau en feuille. Cet élément comprend par exemple un « patch » ou « foil ».

Dans un exemple de mise en oeuvre de l'invention, le matériau en feuille est agencé de manière à ce qu'il puisse apparaître avec au moins trois couleurs différentes.

La deuxième couche peut être réalisée à base de fibres cellulosiques et/ou synthétiques.

Ledit au moins un agent de coloration du matériau en feuille selon l'invention peut être constitué par un agent fluorescent apparaissant coloré en lumière visible. Dans un mode de réalisation, l'agent de coloration fluorescent révèle un effet coloré sous lumière ultraviolette (UV) ou infrarouge (IR).

Un agent fluorescent, coloré ou non, visible ou invisible en lumière visible, peut également être ajouté dans la ou les couches contenant ledit au moins un agent de coloration du matériau en feuille selon l'invention et/ou dans une couche différente.

Dans un mode de réalisation particulier, les première et deuxième couches incorporent des premier et deuxième agents fluorescents, respectivement, les premier et deuxième agents fluorescents apparaissant différents en lumière visible, et/ou en lumière invisible. Au moins un des agents fluorescents, de préférence les deux agents fluorescents, sont incorporés dans la masse et permettent de conférer une nuance colorée à la couche dans laquelle ils sont incorporés.

Les premier et/ou deuxième agents fluorescents peuvent apparaître colorés en lumière visible et/ou en lumière invisible, notamment sous UV ou IR. Le premier agent fluorescent peut présenter une couleur différente de celle du deuxième agent fluorescent en lumière visible et/ou en lumière non visible. En particulier, la couleur du premier agent fluorescent en lumière visible peut correspondre à la couleur du deuxième agent fluorescent en lumière non visible, et la couleur du premier agent fluorescent en lumière non visible correspondre à la couleur du deuxième agent fluorescent en lumière visible. Le passage d'un éclairage en lumière visible à un éclairage en lumière invisible permet alors une inversion des couleurs.

Les premier et deuxième agents fluorescents peuvent couvrir des première et deuxième zones respectivement, les première et deuxième zones étant agencées de manière à former en lumière visible et/ou invisible un ensemble cohérent tel qu'une image, un message ou un motif.

Dans tous les modes de réalisation mettant en oeuvre un agent fluorescent, l'agent fluorescent peut être visible par exemple sous lumière ultraviolette (UV) ou infrarouge (IR). Comme les agents de coloration, il peut être particulaire ou dissous, être un colorant ou un pigment.

De manière générale, le ou les agents fluorescents peuvent coopérer entre eux et/ou avec des agents de coloration et/ou avec un ou plusieurs filigranes incorporés notamment dans la première et/ou la deuxième couche, pour définir un ensemble cohérent tel qu'une image, un message ou un motif, en lumière visible ou invisible, par transparence ou non. Les filigranes et/ou les agents de coloration et/ou les agents fluorescents peuvent présenter des couleurs différentes en fonction des couches dans lesquels ils sont incorporés.

Dans tous les modes de réalisation mettant en oeuvre un agent fluorescent, le matériau en feuille peut également comporter une ou plusieurs des caractéristiques du matériau décrit précédemment et ne comportant pas d'agent fluorescent, en particulier une ou plusieurs des caractéristiques relatives à la nature des agents de coloration, à l'agencement des zones comportant un agent de coloration, à la présence de filigranes, à la nature et à la position des couches, à l'incorporation dans la masse des agents de coloration de manière à conférer une nuance colorée, etc. La première couche peut en particulier être une couche fibreuse ou de revêtement déposée par un traitement de surfaçage, notamment sur la deuxième couche, comme décrit précédemment. Elle peut être une couche extérieure. La deuxième couche peut aussi être une couche fibreuse, notamment à base de fibres cellulosiques.

L'invention a encore pour objet, selon un autre de ses aspects, un article, notamment un document de sécurité et/ou de valeur ou un dispositif de conditionnement, comportant un matériau en feuille tel que défini ci-dessus.

Le document peut constituer l'un des éléments suivants : un billet de banque, un document d'identité, une feuille ou une couverture de passeport, un visa, un coupon, un document de valeur autre qu'un billet de banque, par exemple un chèque, une étiquette de protection et/ou d'authentification, une étiquette de traçabilité.

Le dispositif de conditionnement comporte par exemple un emballage.

L'invention a encore pour objet, selon un autre de ses aspects, un procédé de fabrication d'un matériau en feuille selon la revendication 7.

Le filigrane peut être réalisé classiquement sur une toile embossée d'une forme ronde ou à l'aide d'un rouleau filigraneur (encore appelé « dandy roll ») sur une table plate.

Selon un autre exemple de mise en oeuvre de l'invention, le filigrane peut être réalisé selon le procédé décrit dans la demande de brevet EP 1 122 360, à l'aide d'un ensemble de masques présents sur la toile de la machine à papier, le filigrane obtenu comprenant un ensemble de zones claires agencées pour former une image tramée.

Dans un exemple de mise en oeuvre de l'invention, le procédé comporte l'étape suivante :
- déposer une première couche de revêtement sur la deuxième couche fibreuse, notamment à l'aide d'une presse encolleuse, d'un dispositif d'imprégnation ou d'un dispositif de couchage utilisé en papeterie, par exemple du type à lame d'air ou couchage rideau.

Afin d'éviter d'altérer la couleur en masse du filigrane, il est avantageux de limiter, voire d'empêcher, la pénétration de l'agent de coloration de la couche de revêtement dans la masse de la couche fibreuse comprenant ledit filigrane.

Ceci est réalisé par ajout d'un agent de collage dans la masse de ladite couche fibreuse. L'agent de collage peut être à base d'alkyl-cétène-dimère, encore connu sous l'abréviation AKD, ou à base d'anhydride alcényle succinique, encore connu sous l'abréviation ASA, ou de colophane par exemple.

La présente invention pourra être mieux comprise à la lecture de la description détaillée qui va suivre, d'exemples de mise en oeuvre non limitatifs de l'invention, et à l'examen du dessin annexé, sur lequel :
- la figure 1 représente, schématiquement et partiellement, un document de sécurité et/ou de valeur,
- les figures 2 à 4 sont des vues en coupe transversale, schématiques et partielles, du document de la figure 1 selon différents exemples,
- la figure 5 représente, schématiquement et partiellement, un document de sécurité et/ou de valeur conforme à un autre exemple, observé en lumière transmise,
- la figure 6 représente, schématiquement et partiellement, l'aspect de deux faces opposées du document de la figure 5, observées en réflexion,
- la figure 7 représente, schématiquement et partiellement, un document de sécurité et/ou de valeur conforme à un autre exemple,
- la figure 8 représente, schématiquement et partiellement, en coupe transversale, un matériau en feuille conforme à un exemple,
- les figures 9 à 11 représentent, schématiquement et partiellement, en coupe transversale, un matériau en feuille conforme à différents exemples de mise en oeuvre de l'invention,
- la figure 12 illustre schématiquement une étape de fabrication d'un matériau en feuille, et
- la figure 13 est une vue de détail, schématique et partielle, d'une toile de formation de la machine à papier illustrée à la figure 12.

Sur le dessin, dans un souci de clarté, les proportions relatives des différents éléments représentés n'ont pas toujours été respectées, les vues étant schématiques.

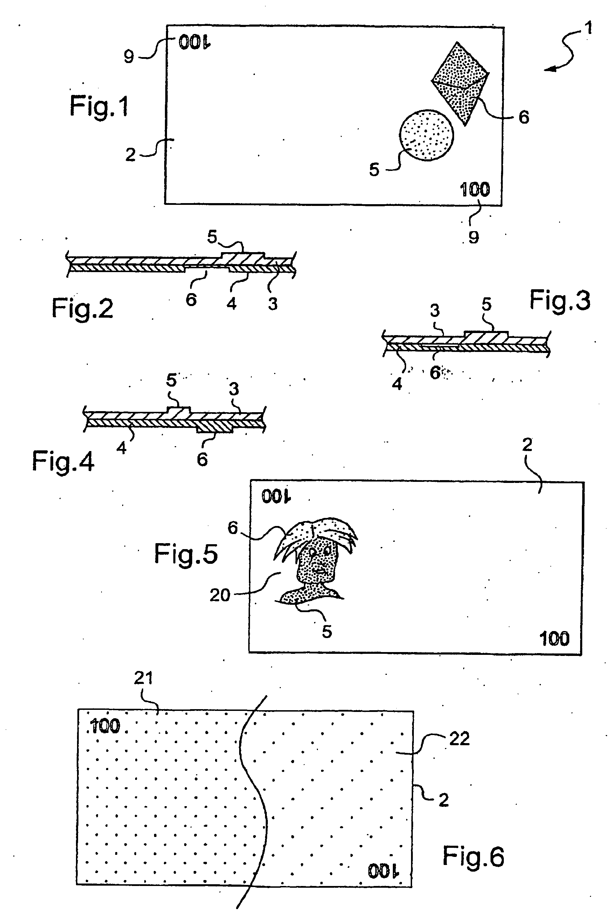

On a représenté sur la figure 1 un document de sécurité et/ou de valeur 1, comportant un matériau en feuille 2 portant des impressions 9.

Le document 1 est, dans l'exemple considéré, un billet de banque.

En variante, le document peut être choisi parmi : un document d'identité, une feuille de passeport, un visa, un coupon, un document de valeur autre qu'un billet de banque, par exemple un chèque, une étiquette de protection et/ou d'authentification, une étiquette de traçabilité, un papier tête de lettre ou à visée publicitaire par exemple.

Le matériau en feuille 2 comporte des première 3 et deuxième 4 couches fibreuses assemblées, présentant chacune au moins un filigrane 5, respectivement 6.

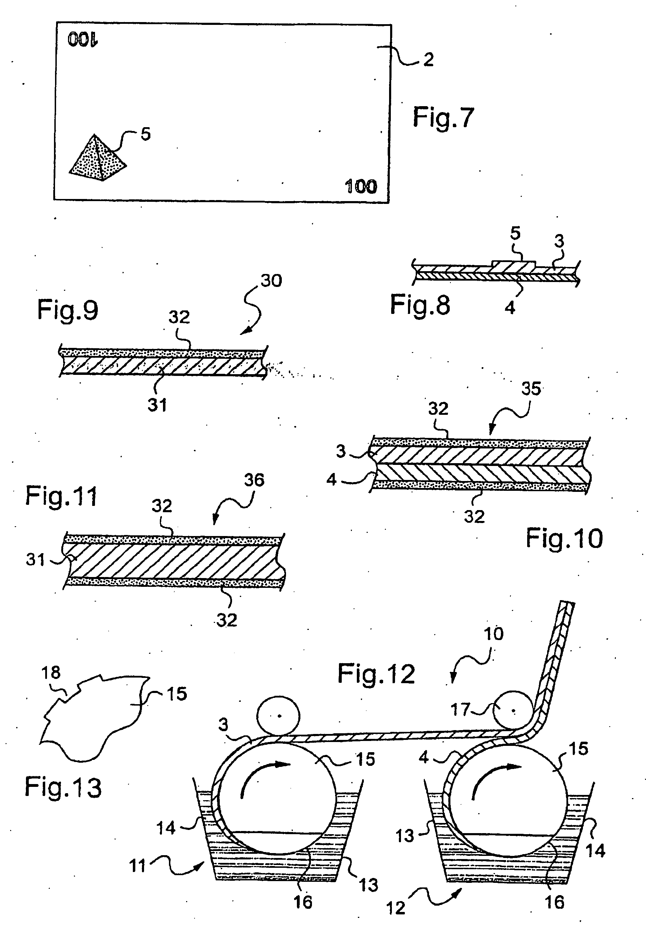

Le matériau en feuille 2 peut être fabriqué de la manière suivante (voir figure 12).

La première couche fibreuse 3 peut être formée sur une première forme ronde 11 d'une machine à papier 10 comprenant deux formes rondes, la deuxième couche fibreuse 4 étant formée sur la deuxième forme ronde 12 de cette machine 10.

Chaque forme ronde 11, 12 comporte une cuve 13 contenant une suspension 14 de fibres, par exemple de fibres de cellulose, dans laquelle est partiellement immergé un cylindre de toile rotatif 15 définissant une surface 16 au contact de laquelle se forme en continu la couche fibreuse correspondante 3, 4.

Les deux couches fibreuses 3 et 4 sont assemblées lorsqu'elles sont encore humides par passage entre un cylindre 15 et un autre cylindre rotatif 17.

Afin de former sur les couches fibreuses 3 et 4 un ou plusieurs filigranes, chaque cylindre de toile rotatif 15 comporte un ou plusieurs embossages 18 comportant des zones en creux et/ou en saillie, comme illustré sur la figure 13.

Par exemple, le cylindre de toile rotatif 15 de la première forme ronde 11 peut comporter des zones en creux de manière à former sur la couche fibreuse 3 un filigrane sombre 5, les zones sombres du filigrane 5 résultant d'une accumulation de fibres, lors de la formation de la couche 3, dans les zones en creux du cylindre 15.

Le cylindre 15 de la deuxième forme ronde 12 peut comporter des zones en relief de manière à former sur la couche fibreuse 4 un filigrane clair 6, les zones claires du filigrane 6 résultant d'une densité de fibres plus faible.

Les couches 3 et 4 peuvent être assemblées de manière à ce que le filigrane 6 de la couche 4 soit tourné dans une direction opposée à la couche 3, comme illustré sur la figure 2.

En variante, comme illustré sur la figure 3, les couches 3 et 4 peuvent être assemblées de manière à ce que le filigrane 6 soit dirigé vers la couche 3.

Les cylindres de toile rotatif 15 des formes rondes 11 et 12 peuvent être agencés de manière à ce que les filigranes 5 et 6 respectifs des couches 3 et 4 soient des filigranes sombres, comme illustré sur la figure 4.

Dans un exemple de mise en oeuvre de l'invention, l'une au moins des couches 3 et 4 comprend un filigrane ombré ou à effet multiton.

Les filigranes 5 et 6 peuvent notamment être des filigranes ombrés, présentant un dégradé de tons.

Dans un autre exemple, l'un au moins des filigranes 5 et 6 comprend un ensemble de zones claires agencées pour former une image tramée à effet multiton.

Un tel filigrane peut être obtenu par un procédé décrit par exemple dans la demande de brevet EP 1 122 360.

Dans l'exemple considéré, la suspension 14 de fibres de la forme ronde 11, respectivement de la forme ronde 12, contient un agent de coloration choisi de manière à conférer à la couche fibreuse 3, respectivement la couche fibreuse 4, une nuance colorée.

L'agent de coloration peut être de tout type, étant par exemple choisi parmi : un colorant direct, un colorant acide, un colorant basique, un pigment organique ou minéral, cette liste n'étant pas limitative.

Les agents de coloration peuvent être choisis de manière à ce que les couches fibreuses 3 et 4 présentent respectivement des première et deuxième couleurs ayant au moins des saturations C* et/ou des angles de teinte *h* différents.

Les première et deuxième couches 3 et 4 peuvent présenter par exemple une clarté L* supérieure à 70, notamment 80 ou 90.

Les couches fibreuses 3 et 4 peuvent présenter une couleur ayant une saturation inférieure à 50, notamment 35 ou 20, de manière à apparaître, en réflexion, en lumière visible, avec une couleur nuancée, faiblement saturée.

Le matériau en feuille 2 peut ainsi apparaître, en lumière transmise, avec une couleur correspondant à la superposition des couleurs respectives des deux couches fibreuses 3 et 4, tandis que les filigranes respectifs 5 et 6 apparaissent avec des couleurs différentes, notamment avec des angles de teinte différents, du fait du contraste plus marqué des filigranes, comme illustré sur la figure 1.

Chaque filigrane 5, 6 peut définir un motif choisi parmi l'un des éléments suivants : un caractère alphanumérique, un symbole, un logo ou un dessin.

Les filigranes 5 et 6 peuvent être agencés de manière à coopérer, lorsque le matériau en feuille 2 est observé en lumière transmise, pour former un motif composé 20, comme illustré sur la figure 5.

Le motif composé 20 comporte par exemple un portrait formé par le premier filigrane 5 reproduisant un visage d'un personnage et apparaissant en lumière transmise avec par exemple une nuance rose et le deuxième filigrane 6 reproduisant la chevelure du personnage et apparaissant en lumière transmise avec par exemple une nuance jaune.

L'invention permet ainsi de créer de nouveaux effets optiques et notamment de créer un filigrane d'aspect multicolore.

Lorsqu'observées en réflexion, sous lumière visible, les faces opposées 21 et 22 du matériau en feuille 2 apparaissent avec des couleurs différentes, notamment avec des saturations et/ou des angles de teinte différents, comme illustré sur la figure 6.

Des exemples de réalisation du matériau en feuille 2 sont donnés ci-dessous.

### Exemple 1

Le matériau en feuille 2 est obtenu en formant un papier bi-jet comportant deux jets (ou couches fibreuses) 3 et 4 assemblés en partie humide, chacune des couches fibreuses présentant un grammage de 60 g/m².

La couche 3 présente une nuance bleue par ajout dans la masse fibreuse d'un colorant bleu commercialisé sous la référence Fexonyl B2G LA à raison de 0,0125 part commerciale pour 100 parts de cellulose. Cette couche 3 comporte un filigrane représentant un premier portrait.

La couche 4 présente une nuance rose par ajout dans la masse fibreuse d'un colorant rouge commercialisé sous la référence Cartasol EBE à raison de 0,05 part commerciale pour 100 parts de cellulose. Cette couche 4 comporte un filigrane représentant un deuxième portrait.

En lumière réfléchie, le matériau en feuille apparaît bicolore, nuancé rose sur une face et nuancé bleu sur l'autre face.

En lumière transmise, la nuance de la zone vélin est « vieux rose » alors que les filigranes conservent la nuance de base de leur couche fibreuse respective. On observe ainsi un premier portrait bleu et un deuxième portrait rose.

Des mesures dans l'espace CIELAB sont réalisées sous un illuminant D65/10° et sont reprises dans le tableau ci-dessous.

| Mesure | L* | a* | b* | C* |
|---|---|---|---|---|
| Face nuancée bleue | 93,5 | -1,86 | -2,61 | 3,2 |
| Face nuancée rose | 93,3 | 3,3 | -1,98 | 3,84 |

### Exemple 2

Le matériau en feuille 2 est obtenu en formant un papier bi-jet comportant deux jets ou couches fibreuses 3 et 4 assemblés en partie humide, chacune des couches fibreuses présentant un grammage de 50 g/m².

La couche 3 présente une nuance bleue par ajout dans la masse fibreuse d'un colorant bleu commercialisé sous la référence Cartaren FBLA à raison de 0,2 part commerciale pour 100 parts de cellulose. Cette couche 3 comporte un filigrane représentant un premier portrait.

La couche 4 présente une nuance jaune par ajout dans la masse fibreuse d'un colorant jaune commercialisé sous la référence NCG LA à raison de 0,25 part commerciale pour 100 parts de cellulose. Cette couche 4 comporte un filigrane représentant un deuxième portrait.

En lumière réfléchie, le matériau en feuille apparaît bicolore, nuancé bleu sur une face et nuancé jaune sur l'autre face.

En lumière transmise, la nuance de la zone vélin est bleu vert alors que les filigranes conservent la nuance de base de leur couche fibreuse respective. On observe ainsi un premier portrait bleu et un deuxième portrait jaune.

Des mesures dans l'espace CIELAB sont réalisées sous un illuminant D65/10° et sont reprises dans le tableau ci-dessous.

| Mesure | L* | a* | b* | C* |
|---|---|---|---|---|
| Face nuancée bleue | 85,79 | -15,76 | -9,49 | 18,39 |
| Face nuancée jaune | 90,36 | -9,47 | 6,31 | 11,38 |

### Exemple 3

Le matériau en feuille 2 est obtenu en formant un papier bi-jet comportant deux jets ou couches fibreuses 3 et 4 assemblés en partie humide, chacune des couches fibreuses présentant un grammage de 50 g/m².

La couche 3 présente une nuance bleue par ajout dans la masse fibreuse d'un colorant bleu commercialisé sous la référence Cartaren FBLA à raison de 0,12 part commerciale pour 100 parts de cellulose. Cette couche 3 comporte un filigrane représentant un premier portrait.

La couche 4 présente une nuance rose par ajout dans la masse fibreuse d'un colorant rouge commercialisé sous la référence Cartasol EBE à raison de 0,2 part commerciale pour 100 parts de cellulose. Cette couche 4 comporte un filigrane représentant un deuxième portrait.

En lumière réfléchie, le matériau en feuille apparaît bicolore, nuancé bleu sur une face et nuancé rose sur l'autre face.

En lumière transmise, la nuance de la zone vélin est « vieux rose » alors que les filigranes conservent la nuance de base de leur couche fibreuse respective. On observe ainsi un premier portrait bleu et un deuxième portrait rose.

Des mesures dans l'espace CIELAB sont réalisées sous un illuminant D65/10° et sont reprises dans le tableau ci-dessous.

| Localisation mesure | L* | a* | B* | C* |
|---|---|---|---|---|
| Face nuancée bleue | 88,03 | -7,58 | -7,70 | 10,8 |
| Face nuancée rose | 87,92 | 5,88 | -5,15 | 7,81 |

Le matériau en feuille 2 peut comporter une couche fibreuse 3 ou 4 dépourvue de filigrane.

Par exemple, seule la couche fibreuse 3 comporte un filigrane 5, comme illustré sur la figure 8, de sorte que le matériau en feuille 2 laisse apparaître, en lumière transmise, un filigrane monochrome, comme représenté sur la figure 7.

Dans les exemples qui viennent d'être décrits, le matériau en feuille 2 comporte deux couches fibreuses assemblées.

Conformément à l'invention, le matériau en feuille comporte une unique couche fibreuse avec un filigrane et une couche nuancée déposée sur ladite couche fibreuse.

On a représenté sur la figure 9, en coupe transversale, un matériau en feuille 30 conforme à un exemple de mise en oeuvre de l'invention comportant une unique couche fibreuse 31 comprenant un filigrane, non représenté, et une couche de revêtement 32 déposée sur la couche fibreuse 31, par exemple à l'aide d'une presse-encolleuse ou d'un dispositif d'imprégnation.

La couche de revêtement 32 comporte un colorant de sorte que la face du matériau en feuille 30 définie par la couche de revêtement 32 apparaisse, en réflexion, avec une couleur différente de celle de la couche fibreuse 31.

Dans l'exemple considéré, cette couche fibreuse 31 comporte un agent de coloration incorporé dans sa masse, et le filigrane réalisé sur cette couche 31 apparaît, en lumière transmise, avec une nuance colorée correspondant sensiblement à la couleur de cette couche 31.

On a représenté sur la figure 10 un matériau en feuille 35 conforme à un exemple de mise en oeuvre de l'invention comportant deux couches fibreuses assemblées 3 et 4 comprenant chacune un filigrane, comme décrit en référence aux figures 2 à 4.

Deux couches de revêtement 32 sont déposées sur les faces externes des couches fibreuses 3 et 4.

Un exemple du matériau 35 est donné ci-dessous.

### Exemple 4

On utilise le papier bi-jet de l'Exemple 1.

Ce papier reçoit sur ses faces opposées une couche de revêtement jaune, à l'aide d'un traitement de surface par presse-encolleuse (ou *size press* en anglais), le colorant jaune étant celui commercialisé sous la référence NCG LA dosé à 0,5 % commercial. Cette dose correspond environ à un taux de colorant jaune transféré dans le papier d'environ 0,25 part commerciale pour 100 parts de papier.

| Mesure | L* | a* | b* | Saturation |
|---|---|---|---|---|
| Face nuancée jaune | 90,97 | -10,28 | 28,59 | 30,38 |

Le matériau en feuille 35 présente en réflexion une nuance jaune et, en lumière transmise, un premier portrait bleu et un deuxième portrait rose.

On a représenté sur la figure 11 un matériau en feuille 36 conforme à un exemple de mise en oeuvre de l'invention comportant une couche fibreuse 31 colorée dans la masse et présentant un filigrane, et deux couches de revêtement 32 déposées sur les faces opposées de la couche fibreuse 31.

Un exemple de matériau en feuille 36 est donné ci-dessous.

### Exemple 5

Le matériau en feuille 36 conforme à l'invention comporte un papier mono-jet présentant un grammage de 85 g/m².

Le papier ou couche fibreuse 31 présente une nuance bleue par ajout dans la masse fibreuse d'un colorant bleu commercialisé sous la référence Fexonyl B2G LA à raison de 0,01 part commerciale pour 100 parts de cellulose. Cette couche 31 comporte un filigrane présentant un portrait.

La couche fibreuse humide reçoit un traitement de surface par presse-encolleuse pour déposer un colorant jaune commercialisé sous la référence NCG LA dosé à 0,5 % commercial. Cette dose correspond environ à un taux de colorant jaune transféré dans le papier d'environ 0,25 part commerciale pour 100 parts de papier.

| Mesure | L* | a* | b* | C* |
|---|---|---|---|---|
| Vélin nuance bleue (avant revêtement jaune) | 94,9 | -5,34 | -2,31 | 5,81 |
| Vélin (après revêtement jaune) | 92,05 | -13,95 | 33,8 | 36,56 |

Bien entendu, l'invention n'est pas limitée aux exemples de mise en oeuvre qui viennent d'être décrits.

On peut réaliser par exemple un matériau en feuille avec au moins trois couches fibreuses présentant des épaisseurs relativement faibles de manière à ne pas atténuer outre mesure le contraste des filigranes présents sur les couches fibreuses.

En variante, on peut par exemple réaliser un matériau en feuille avec deux couches fibreuses avec chacune au moins un filigrane et une troisième couche de revêtement déposée sur l'une des deux couches fibreuses, par exemple à l'aide d'une presse-encolleuse. De préférence, les trois couches présentent des couleurs différentes.

Chaque face du matériau en feuille peut, le cas échéant, présenter plus d'une couleur.

L'expression « comportant un » doit être comprise comme étant synonyme de « comportant au moins un », sauf si le contraire est spécifié.

## Revendications

1. Matériau en feuille (2 ; 30 ; 35 ; 36) comportant :
- au moins une première couche (32) présentant au moins une première couleur,
- au moins une deuxième couche (4) comportant au moins un filigrane (6) et présentant au moins une deuxième couleur,
aucune des deux couches n'étant blanche, la première et la deuxième couche incorporant dans sa masse au moins un agent de coloration choisi parmi un colorant direct, un colorant acide, un colorant basique, un pigment organique ou minéral et
ladite au moins une première couche (32) étant une couche de revêtement déposée par un traitement de surfaçage, par imprégnation de la deuxième couche (4) ou par couchage sur la deuxième couche (4) et les agents de coloration des première (32) et deuxième (4) couches étant choisis de manière à conférer auxdites couches une nuance colorée apparaissant à l'oeil nu comme sensiblement continue,
la deuxième couche (4) étant une couche fibreuse, notamment à base de fibres cellulosiques, comportant un agent de collage dans sa masse.

2. Matériau selon la revendication 1, l'une au moins des première et deuxième couches (32 ; 4) présentant une clarté (L*) supérieure à 70, notamment 80 ou 90.

3. Matériau selon l'une quelconque des revendications précédentes, la deuxième couche (4) présentant une couleur ayant une saturation (C*) inférieure à 50, notamment 35 ou 20.

4. Matériau selon l'une quelconque des revendications précédentes, un des agents de coloration de la première (32) ou deuxième (4) couches étant un agent fluorescent apparaissant coloré en lumière visible ou révélant un effet coloré sous lumière UV ou IR.

5. Matériau en feuille selon l'une quelconque des revendications précédentes, les première et deuxième couleurs ayant au moins des saturations (C*) et/ou des angles de teinte (*h*) différents:

6. Article, notamment un document de sécurité et/ou de valeur, comportant un matériau en feuille selon l'une quelconque des revendications précédentes.

7. Procédé de fabrication par voie papetière d'un matériau en feuille selon l'une quelconque des revendications 1 à 5, comportant l'étape suivante :
- réaliser le filigrane de la deuxième couche fibreuse en phase humide, le filigrane comprenant des portions ayant une masse surfacique différente de celle du reste du matériau en feuille.

## Patentansprüche

1. Folienmaterial (2; 30; 35; 36) mit:
mindestens einer ersten Schicht (32), die mindestens eine erste Farbe hat, und
mindestens einer zweiten Schicht (4), die mindestens ein Wasserzeichen (6) aufweist und mindestens eine zweite Farbe hat,
wobei keine der beiden Schichten weiß ist, wobei die erste und die zweite Schicht in ihrer Masse mindestens ein Färbemittel beinhalten, das aus einem Direktfarbstoff, einem Säurefarbstoff, einem basischen Farbstoff, einem organischen oder einem mineralischen Pigment ausgewählt ist, und
wobei die mindestens eine erste Schicht (32) eine Belagsschicht ist, die durch eine Oberflächenbehandlung, durch Imprägnierung der zweiten Schicht (4) oder durch Beschichtung auf der zweiten Schicht (4) abgelagert ist, und die Färbemittel der ersten (32) und der zweiten (4) Schicht so ausgewählt sind, dass sie den Schichten eine Farbschattierung verleiht, die mit bloßem Auge im Wesentlichen kontinuierlich erscheint,
wobei die zweite Schicht (4) eine Faserschicht, insbesondere auf Zellulosefaserbasis, ist, die in ihrer Masse ein Klebemittel aufweist.

2. Material nach Anspruch 1, wobei mindestens eine der ersten und der zweiten Schicht (32; 4) eine Klarheit (L*) über 70, insbesondere 80 oder 90, aufweist.

3. Material nach einem der vorhergehenden Ansprüche, wobei die zweite Schicht (4) eine Farbe mit einer Sättigung (C*) unter 50, insbesondere 35 oder 20, aufweist.

4. Material nach einem der vorhergehenden Ansprüche, wobei eines der Färbemittel der ersten (32) oder der zweiten (4) Schicht ein Fluoreszenzstoff ist, der in sichtbarem Licht gefärbt erscheint oder unter UV- oder IR-Licht einen Farbeffekt zeigt.

5. Folienmaterial nach einem der vorhergehenden Ansprüche, wobei die erste und die zweite Farbe mindestens verschiedene Sättigungen (C*) und/oder Farbtonwinkel (*h*) aufweisen.

6. Artikel, insbesondere Sicherheits- und/oder Wertdokument, das ein Folienmaterial nach einem der vorhergehenden Ansprüche aufweist.

7. Papierwegherstellungsverfahren eines Folienmaterials nach einem der Ansprüche 1 bis 5, wobei beim Verfahren:
das Wasserzeichen der zweiten Faserschicht in feuchtem Stadium erzeugt wird, wobei das Wasserzeichen Teile mit einer Flächenmasse aufweist, die von der des Rests des Folienmaterials verschieden ist.

## Claims

1. Sheet material (2; 30; 35; 36), comprising:
- at least one first layer (32) having at least one first colour;
- at least one second layer (4) comprising at least one watermark (6) and having at least one second colour,
neither of the two layers being white, the first and the second layer incorporating in its mass at least one dyeing agent chosen from a direct dye, an acid dye, a basic dye, an organic or mineral pigment and
said at least one first layer (32) being a coating layer deposited by a surfacing treatment, by impregnation of the second layer (4) or by coating onto the second layer (4) and the dyeing agents of the first (32) and second (4) layers being chosen so as to give said layers a colored shade appearing approximately continuous to the naked eye,
the second layer (4) being a fibrous layer, in particular cellulose-fibre-based, comprising a sizing agent in its mass.

2. Material according to Claim 1, the at least one of the first and second layers (32; 4) having a lightness (L*) greater than 70, in particular 80 or 90.

3. Material according to either of the preceding claims, the second layer (4) exhibiting a colour having a saturation (C*) less than 50, in particular of 35 or 20.

4. Material according to any one of the preceding claims, one of the dyeing agents of the first (32) or second (4) layers being a fluorescent agent that appears coloured in visible light or that displays a coloured effect under UV or IR light.

5. Sheet material according to any one of the preceding claims, the first and second colours having at least different saturations (C*) and/or hue angles (*h*).

6. Article, in particular a secure document and/or a value document comprising a sheet material according to any one of the preceding claims.

7. Method for manufacturing by papermaking means a sheet material according to any one of Claims 1 to 5, comprising the following step:
- producing the watermark of the second fibrous layer in the wet state, the watermark comprising parts having a surface mass different to that of the remainder of the sheet material.
